# EUROPEAN PATENT SPECIFICATION

(11) **EP 1 790 209 B1**
(45) Date of publication and mention of the grant of the patent: **11.04.2012**
(21) Application number: 06255985.1
(22) Date of filing: 22.11.2006
(51) Int. Cl.: A01F 15/07

(54) **Variable speed wrapping**
Umhüllung mit variabler Geschwindigkeit
Enrubannage à vitesse variable

(30) Priority: 24.11.2005 GB 0523891
(43) Date of publication of application: 30.05.2007
(73) Proprietor: Kuhn-Geldrop B.V., 5667 KP Geldrop (NL)
(72) Inventor: van Amstel, Leonardus H. M., 5663 RW Geldrop (NL); van de Walle, Jacobus I., 5674 SM Neunen (NL)
(74) Representative: Raynor, Simon Mark

(56) References cited:
- EP-A- 1 310 155
- WO-A-98/41450
- WO-A-99/64297
- DE-A1- 19 706 643
- GB-A- 2 191 984
- US-A1- 2004 083 905

## Description

This invention relates to a bale wrapper apparatus for applying stretch film wrapping to the outer surface of an agricultural bale, said bale being of circular or rectangular cross section having a cylindrical outer surface or a four sided outer surface respectively, and opposed end faces.

A bale wrapper apparatus according to the invention may be an independently operated machine i.e. which carries out bale wrapping only, or may be incorporated within an integrated combined baler and wrapper machine.

It is well known to apply stretch film wrapping to agricultural bales, in order to protect the contents of the bale from the weather e.g. hay or straw bales, and in the case of silage crops to form a substantially air and water tight enclosure within which the crop can mature or ferment to form silage.

The apparatus usually has a table with rollers and/or belts on which the bale is supported for rotation about a substantially horizontal axis (when the apparatus is standing on level ground), while relative rotation takes place about a substantially vertical axis between the bale and at least one dispenser reel from which a supply of stretch film is withdrawn.

The relative rotation about the vertical axis can be obtained either by having a fixed dispenser and arranging for the table to rotate the bale about the vertical axis (a so-called rotating turntable machine); or to cause the dispenser reel to orbit around the bale (a so-called satellite machine).

It is also known to provide an integrated baler and wrapper apparatus, in which a rotatable ring carries one or more dispensers from which film is withdrawn in order to apply helical windings around the rotating bale. This ring can be horizontal, or vertical, and its axis of rotation extends generally perpendicular to the longitudinal axis of the bale.

US 2004/0083905 A1 describes a wrapping implement that is mounted at the rear of a round baler with connections permitting its quick attachment to and detachment from the baler. The wrapping implement has a vertical ring for guiding a wrapping material dispenser and a bale carrier that permits rotation of a supported bale about an axis that is perpendicular to the ring axis.

The combination of two different rotations results in a longitudinal strip of film being withdrawn from the supply reel, and applied as successive helical windings to the outer surface and end faces of the bale. It is important to set the relative speeds of rotation such that each succeeding winding partially overlaps the preceding winding, so that there are no lateral gaps between the edges of adjacent windings allowing gas and/or liquid flow from atmosphere to the interior of the bale, or vice versa.

To allow for irregularities in the wrapping process, it is usual to arrange for about 50% lateral overlap between successive windings, to minimise the risk of any lateral gaps being created during the wrapping process, or during subsequent handling and storage of the wrapped bales. Also, this provides an even spread of film layers.

In the case of wrapping of bales of a wet crop e.g. partly wilted cut grass to form silage, it is generally considered sufficient to have a minimum of four overlapping windings at any region. This enables the wrapping to contain the material (which is deformable during handling), and also prevents any ingress of air or water from atmosphere to the interior of the bale which can result in mould growth and at the very least loss of nutritional value of the silage formed, and possibly also production of a product which will be harmful to the livestock to which it is fed.

However, in the case of wrapping of densely packed dry matter, such as hay or straw, it is generally considered acceptable to carry out wrapping at constant relative speeds in each wrapping cycle, but to minimise gas exchange between the bale contents and atmosphere (in both directions) it is usually necessary to have a minimum of six overlapping windings of film at any region of the wrapped surface of the bale.

Clearly, the greater the number of windings applied, the more will be the amount of film consumed for each wrapping cycle, and it is a significant economic consideration to attempt to minimise film usage while at the same time providing wrapping of bales to an acceptable standard.

The present invention seeks to address this problem in an entirely unique manner, by arranging for each wrapping cycle to have at least two different relative speed ratios between a) the speed of rotation of the bale about a first substantially horizontal axis and b) the relative speed of rotation about a second axis (extending substantially perpendicular to the first axis) between the bale and the film dispenser.

According to the invention there is provided a bale wrapper apparatus which comprises:
a table for supporting an agricultural bale with its longitudinal axis extending substantially parallel to the ground and forming a first axis about which the bale is rotatable during a wrapping cycle;
a holder for a dispenser reel of stretch film from which a strip of film can be withdrawn in order to form successive overlapping windings which wrap the outer surface and the end faces of the bale during the wrapping cycle; means for applying relative rotation between the table and the holder about a second axis extending substantially perpendicular to the longitudinal axis of the bale; and electric and/or hydraulic motors to provide power supply to rotate the components of the apparatus about the first and second axes; in which the operation of the apparatus is controllable so that the relative speeds of rotation about the first and second axes can be varied during each wrapping cycle to obtain required variation in winding overlap coverage of the bale; characterised in that the apparatus includes a programmer that is programmed to provide a variation in relative speeds about the first and second axes during each wrapping cycle whereby the wrapping cycle has at least two wrapping stages, in which a first stage of coverage is carried out with one predetermined overlap ratio between successive windings, and a further stage of coverage is carried out with a different overlap ratio between successive windings.

The apparatus of the invention therefore enables the user to vary the overlap between successive windings of film as may be required during the wrapping cycle for each bale, and in such a way as to obtain economic usage of film while still achieving a satisfactory coverage or wrapping of the bale.

By way of example, it is generally considered desirable that the initial coverage of the bale should be particularly effective, reliable and repeatable, and therefore the winding overlap may be set to more than 50% e.g. 67% (2/3rd) overlap.

This initial coverage may take place during an initial stage, at a first relative speed of rotation about the first and second axes, until each region of the outer surface and end faces of the bale have been covered by three layers of film.

Thereafter, the relative speeds of rotation can be varied to a second relative speed such that subsequent windings have a smaller overlap, say 50%, which still provides effective coverage but with less usage of film. This is expected to appeal to users, because it is the initial coverage which is particularly important (to prevent any air/water leakage paths being formed e.g. by the presence of outwardly projecting spiky material in the outer surface of the bale), when a higher percentage overlap is provided, and preferably with three layer coverage.

By contrast, the outer layers of coverage are less critical, and therefore 50% overlap and coverage to obtain only two outer layers may be acceptable.

In the case of wrapping of dry matter, such as hay or straw, it is present accepted practice that six layers of wrapping should be provided. By contrast, with controlled operation of the wrapping cycle in apparatus according to the invention, in a particularly preferred embodiment, an acceptable coverage can be obtained with a minimum of five layers of film coverage, (three layers at 2/3rd overlap plus two layers at 50% overlap) which represents a substantial reduction in film usage.

In one preferred form, the table is of the rotating turntable type, thereby to provide simultaneous rotation of the bale about the first and second axes. In a further particularly preferred form, the apparatus is of the satellite arm type, in which the holder for the dispenser reel is caused to orbit in a generally horizontal plane about the second axis.

However, the invention is also applicable to wrapper apparatus, preferably incorporated in an integrated baler/wrapper apparatus, in which a rotatable ring is arranged with its axis (the second axis) of rotation extending substantially perpendicular to the axis (the first axis) about which the bale is rotatable. The rotatable ring may be arranged in a generally horizontal plane in one embodiment, and in a generally vertical plane in a further embodiment.

More than one holder may be provided, if two or more windings of film wrapping are required.

A suitable drive mechanism is provided to drive the components of the apparatus about the first and second axes, and the power to operate the mechanism is derived from hydraulic or electric motors. A suitable programmer is provided, to control the operation of the motors and vary the output to obtain the required variation in relative speeds about the first and second axes during the wrapping cycle.

This may be pre-set during initial assembly, or may be arranged to be variable on site according to bale coverage required by the user.

A preferred embodiment of bale wrapper apparatus according to the invention will now be described in detail, by way of example only, with reference to the accompanying drawings, in which:
Figure 1 is a schematic perspective illustration showing the general known concept of a bale wrapper to which the invention may be applied, and by way of background to description of the preferred embodiment;
Figure 2a is a schematic side view illustration of the withdrawal of a longitudinal strip of stretch film through a pre-stretcher unit, prior to application to wrap a bale;
Figure 2b is a plan view corresponding to Figure 2a; and
Figure 3 is a schematic illustration of the wrapping of a cylindrical bale to form a novel arrangement of stretch film overlap coverage of the bale, by a preferred development according to the invention of the bale wrapper apparatus of generally known type shown in Figures 1, 2a and 2b.

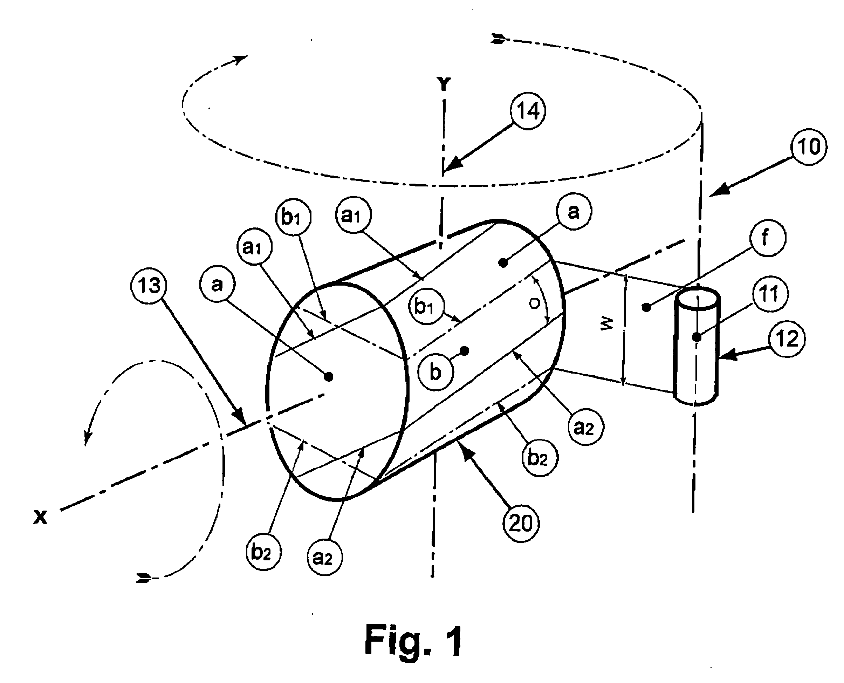

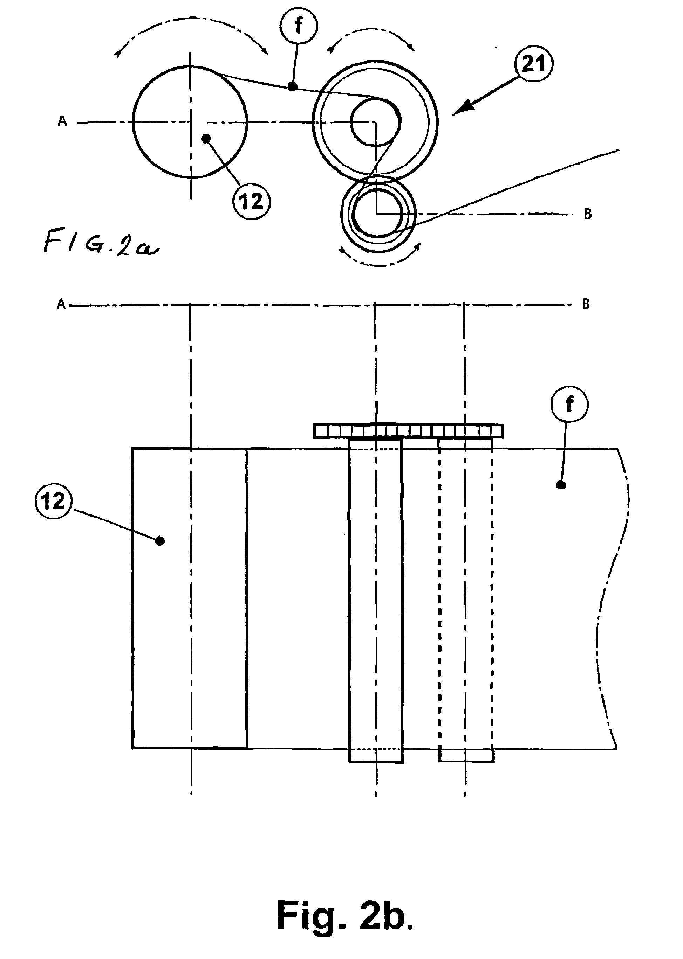

Referring first to Figures 1, 2a and 2b, the general concept of wrapping of an agricultural bale will first be described, to form background to the description of the preferred embodiment of the invention.

A bale wrapper apparatus is designated generally by reference 10, and is of the rotating satellite dispenser type. A holder 11 is mounted on one end of a rotating arm (not shown) to rotate about Y axis. A dispenser reel 12 is mounted on the holder 11, and a length of stretch film f is withdrawn from the reel 12 to form successive overlapping windings of stretch film around the cylindrical outer surface, and the opposed circular end faces of a rotating cylindrical bale 20.

A table (not shown in detail) is provided to support the agricultural bale 20 with its longitudinal axis X extending substantially parallel to the ground (when the apparatus is standing on level ground) and forming a first axis 13 about which the bale 20 is rotatable during a wrapping cycle.

During a wrapping cycle, the bale 20 rotates about first axis 13, while simultaneously film dispenser reel 12 is caused to orbit in a substantially horizontal plane about vertical axis Y, forming a second axis 14.

Figures 2a and 2b show the leading of a length of film (f) which is withdrawn from dispenser reel 12 to the outer surface of the bale, by way of a pre-stretcher unit 21. This is set so as to apply required stretching of the film (f) so that pre-stretched film windings are applied around the outer surface of the bale.

This is one preferred form of bale wrapper apparatus to which the invention may be applied, but it should be understood that the general concept of the invention is also applicable to bale wrapper apparatus of the rotating turntable type; and also to apparatus having a rotatable ring carrying one or more film dispensers, as referred to above.

The invention therefore provides means for applying relative rotation between the table and the holder 12 about a second axis 14, which extends substantially perpendicular to the longitudinal axis X of the bale 20. Such a means is provided by both rotating turntable type bale wrapper apparatus, and also satellite dispenser type apparatus.

As will be described in more detail below, the invention provides controlled operation of the bale wrapper apparatus so that the relative speeds of rotation about the first and second axes 13, 14 can be varied during each wrapping cycle to obtain required variation in winding overlap coverage of the bale.

Returning to the description in more detail of the general known concept of wrapping of a bale as shown in Figure 1, this shows withdrawal of a length of film (f) from dispenser reel 12, having width (w), and which is applied as successive helical windings around the outer surface of the bale. A first winding is designated by letter, having opposed parallel side edges a₁ and a₂. A subsequent winding is shown by reference letter b, having opposed parallel edges b₁ and b₂. The drawing shows overlap between these successive windings a, b, designated by reference letter o, and which comprises approximately 50% overlap in a typical wrapping cycle in known machines. This is a constant overlap throughout the wrapping cycle in known machines, until required numbers of layers of coverage have been obtained which, typically, may be six layer coverage for hay and straw bales, and four layer coverage for crop ensilage.

The preferred embodiment of the invention provides a control system (not shown) which controls the operation of the apparatus so that the relative speeds of rotation about the first and second axes 13, 14 can be varied during each wrapping cycle to obtain required variation in winding overlap coverage.

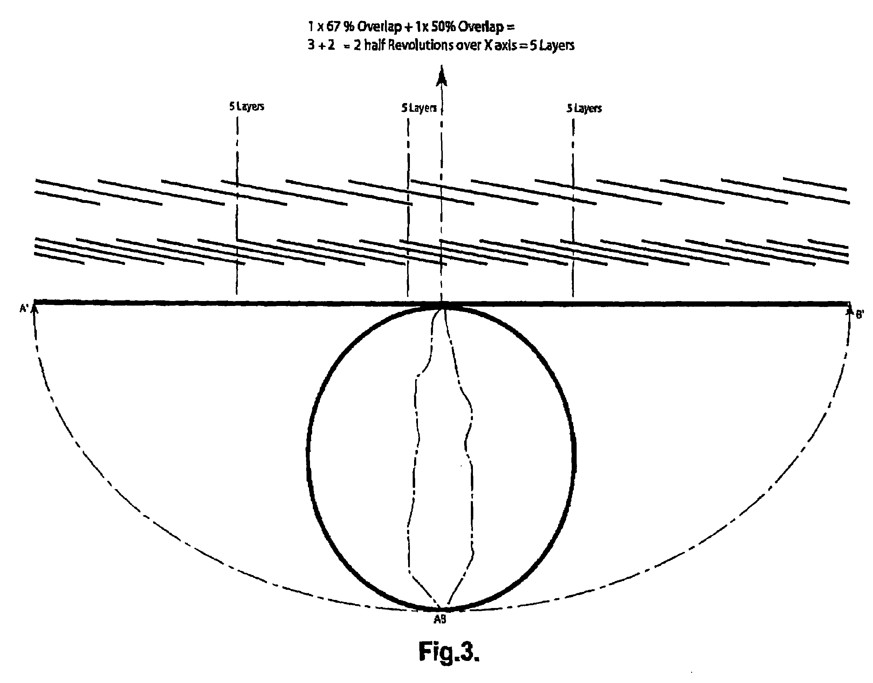

A particularly preferred form of variable overlap coverage is shown in Figure 3, and which can be obtained in use of a particularly preferred embodiment of bale wrapper apparatus according to the invention.

This shows an initial stage of wrapping at approximately 2/3rd overlap between successive windings, and at a first setting of relative speeds of rotation about first and second axes 13, 14, until such time as there is a minimum coverage of the bale of at least three layers, as shown.

This is obtained for particular speeds of revolution of bale 20 about first axis 13, and of holder 11 about second axis 14, such that three layers are obtained during one half revolution of the bale 20 about first axis 13.

Thereafter, for a further and/or final stage of the wrapping cycle, the relative speeds of rotation are altered, so that approximately 50% overlap is obtained between successive windings, and wrapping continues until a minimum of two further layers of coverage are obtained, as shown.

Conveniently, this is achieved by maintaining the speed of rotation of the bale 20 about first axis 13, and reducing the speed of rotation of the holder 11 about second axis 14, and preferably such that the two further layers of coverage are obtained during a second half revolution of the bale 20. Therefore, for one complete revolutions of the bale, at least five layer coverage of the bale is obtained.

It is believed that this will provide an acceptable wrapped bale, and to a standard comparable to that obtainable with known apparatus operated at constant speed in the wrapping cycle, to obtain six layer coverage.

Hydraulic or electric motors (not shown) may be provided to supply power input to operate any suitable drive transmission to rotate the components of the apparatus, and a suitable programmer (not shown) controls the operation of the motors to vary the relative speeds about the first and second axes 13, 14 in the manner required during each wrapping cycle. The programmer may be arranged to be adjustable on site to provide different operating programmes for each wrapping cycle, if required. Alternatively, this programmer may be pre-set to any required relative speeds of rotation.

It should be understood that Figure 3 is illustrative only of one particularly preferred embodiment of the invention. Thus, the invention has wider application, with an alternative preferred development of the invention as defined in claim 1 (which is characterised by the feature that the operation of the apparatus is controllable so that the relative speeds of rotations about the first and second axes (13, 14) can be varied during each wrapping cycle to obtain any required winding overlap coverage of the bale (20).

In this alternative development, the wrapping cycle has at least two wrapping stages, in which a first stage of coverage is carried out with one predetermined overlap ratio between successive windings (a, b), and a further stage of coverage which is carried out at a different overlap ratio between successive windings (a, b).

Preferably, in this alternative development, the wrapping cycle has first and second stages of coverage, in which the second stage of coverage has a smaller percentage overlap between successive windings (a, b) than the percentage overlap in the first stage of coverage.

The embodiment of the invention described above may be provided in a rotating turntable type of bale wrapper apparatus, or a rotating satellite dispenser arrangement.

Also, although not shown, the invention may be applied to a baler apparatus (or an integrated baler wrapper apparatus) of the type having a rotatable ring carrying one or more dispensers from which film is withdrawn, in order to apply helical windings of wrapping around a rotating bale.

## Claims

1. A bale wrapper apparatus (10) which comprises:
a table for supporting an agricultural bale (20) with its longitudinal axis X extending substantially parallel to the ground and forming a first axis (13) about which the bale (20) is rotatable during a wrapping cycle;
a holder (11) for a dispenser reel (12) of stretch film from which a strip of film (f) can be withdrawn in order to form successive overlapping windings (a, b) which wrap the outer surface and the end faces of the bale during the wrapping cycle;
means for applying relative rotation between the table and the holder (11) about a second axis (14) extending substantially perpendicular to the longitudinal axis X of the bale (20); and
electric and/or hydraulic motors to provide power supply to rotate the components of the apparatus (10) about the first and second axes (13, 14):
in which the operation of the apparatus is controllable so that the relative speeds of rotation about the first and second axes (13,14) can be varied during each wrapping cycle to obtain a required variation in winding overlap coverage of the bale (20);
**characterised in that** the apparatus includes a programmer that is programmed to provide a variation in relative speeds about the first and second axes (13, 14) during each wrapping cycle whereby the wrapping cycle has at least two wrapping stages, in which a first stage of coverage is carried out with one predetermined overlap ratio between successive windings (a, b), and a further stage of coverage is carried out with a different overlap ratio between successive windings (a, b).

2. Apparatus according to claim 1, in which the second stage of coverage has a smaller percentage overlap between successive windings (a, b) than the percentage overlap in the first stage of coverage.

3. Apparatus according to any preceding claim, in which the apparatus is programmed to provide a wrapping cycle in which an initial coverage of the outer surface of the bale comprises at least three layers of windings a, b with approximately 2/3rd overlap between successive windings, and a further or final stage of wrapping is provided by at least two layers of overlapping windings at approximately 50% overlap between successive windings.

4. Apparatus according to claim 3, in which the three initial layers of windings at approximately 2/3rd overlap and the two subsequent layers at approximately 50% overlap are obtained while the bale (20) is rotated about first axis (13) through approximately one revolution.

5. Apparatus according to any one of the preceding claims, in which the table is of the rotating turntable type.

6. Apparatus according to any one of claims 1 to 4, in which the holder 11 is rotatable about an upright second axis (14) in the manner of a rotating satellite type arrangement.

7. Apparatus according to any one of claims 1 to 4, in which the holder (11) is mounted on a rotatable ring which is rotatable in a substantially vertical or horizontal plane, and having an axis of rotation extending substantially perpendicular to the first axis (13) about which the bale (20) is rotatable.

8. Apparatus according to claim 7, and in the form of an integrated baler and wrapper apparatus.

## Patentansprüche

1. Ballenwickelvorrichtung (10), umfassend:
einen Tisch zum Tragen eines landwirtschaftlichen Ballens (20), wobei sich seine Längsachse X im Wesentlichen parallel zum Boden erstreckt und eine erste Achse (13) bildet, um die der Ballen (20) während eines Wickelzyklus gedreht werden kann,
einen Halter (11) für eine Stretchfolienabgaberolle (12), von der ein Streifen Folie (f) abgezogen werden kann, um aufeinanderfolgende überlappende Wicklungen (a, b) zu bilden, die während des Wickelzyklus die Außenfläche und die Endseiten des Ballens umwickeln,
Mittel zum Anwenden relativer Drehung zwischen dem Tisch und dem Halter (11) um eine zweite Achse (14), die sich im Wesentlichen lotrecht zur Längsachse X des Ballens (20) erstreckt, und
Elektro- und/oder Hydraulikmotoren zum Bereitstellen einer Energieversorgung zum Drehen der Bauteile der Vorrichtung (10) um die erste und die zweite Achse (13, 14):
wobei der Betrieb der Vorrichtung so gesteuert werden kann, dass die relative Geschwindigkeit der Drehung um die erste und die zweite Achse (13, 14) während jedes Wickelzyklus variiert werden kann, um eine erforderliche Variation der Wicklungsüberlappungsabdeckung des Ballens (20) zu erhalten,
**dadurch gekennzeichnet, dass** die Vorrichtung ein Programmiergerät aufweist, das programmiert ist, um eine Variation der relativen Geschwindigkeit um die erste und die zweite Achse (13, 14) während jedes Wickelzyklus bereitzustellen, wobei der Wickelzyklus wenigstens zwei Wickelphasen hat, bei denen eine erste Abdeckungsphase mit einem vorbestimmten Überlappungsverhältnis zwischen aufeinanderfolgenden Wicklungen (a, b) durchgeführt wird und eine weitere Abdeckungsphase mit einem anderen Überlappungsverhältnis zwischen aufeinanderfolgenden Wicklungen (a, b) durchgeführt wird.

2. Vorrichtung nach Anspruch 1, wobei die zweite Abdeckungsphase eine kleinere prozentuale Überlappung zwischen aufeinanderfolgenden Wicklungen (a, b) hat als die prozentuale Überlappung der ersten Abdeckungsphase.

3. Vorrichtung nach einem der vorhergehenden Ansprüche, wobei die Vorrichtung so programiert ist, dass sie einen Wickelzyklus bereitstellt, bei dem eine anfängliche Abdeckung der Außenfläche des Ballens wenigstens drei Lagen von Wicklungen a, b mit etwa einer Zweidrittelüberlappung zwischen aufeinanderfolgenden Wicklungen umfasst und eine weitere oder abschließende Wickelphase von wenigstens zwei Lagen von überlappenden Wicklungen mit etwa 50 % Überlappung zwischen aufeinanderfolgenden Wicklungen bereitgestellt wird.

4. Vorrichtung nach Anspruch 3, wobei die drei anfänglichen Lagen von Wicklungen mit etwa Zweidrittelüberlappung und die zwei darauffolgenden Lagen mit etwa 50 % Überlappung erhalten werden, während der Ballen (20) um etwa eine ganze Umdrehung um die erste Achse (13) gedreht wird.

5. Vorrichtung nach einem der vorhergehenden Ansprüche, wobei der Tisch vom drehbaren Drehscheibentyp ist.

6. Vorrichtung nach einem der Ansprüche 1 bis 4, wobei der Halter 11 in der Art einer rotierenden Anordnung vom Satellitentyp um eine aufrechte zweite Achse (14) drehbar ist.

7. Vorrichtung nach einem der Ansprüche 1 bis 4, wobei der Halter (11) auf einem drehbaren Ring montiert ist, der in einer im Wesentlichen vertikalen oder horizontalen Ebene drehbar ist und eine Drehachse hat, die sich im Wesentlichen lotrecht zur ersten Achse (13) erstreckt, um die der Ballen (20) gedreht werden kann.

8. Vorrichtung nach Anspruch 7 und in der Form einer integrierten Ballenpresse-Ballenwickler-Vorrichtung.

## Revendications

1. Appareil d'emballage de balles (10) qui comprend :
une table pour supporter une balle agricole (20) avec son axe longitudinal X s'étirant substantiellement en parallèle au sol et formant un premier axe (13) autour duquel la balle (20) est pivotable pendant un cycle d'emballage ;
un support (11) pour une bobine distributrice (12) de film étirable à partir de laquelle une bande de film (f) peut être retirée afin de former des enroulements à chevauchement successifs (a, b) qui enveloppent la surface externe et les faces terminales de la balle pendant le cycle d'emballage ;
des moyens pour appliquer une rotation relative entre la table et le support (11) autour d'un second axe (14) s'étirant substantiellement en perpendiculaire à l'axe longitudinal X de la balle (20) ; et
des moteurs électriques et/ou hydrauliques pour fournir une alimentation électrique pour faire tourner les composants de l'appareil (10) autour des premier et second axes (13, 14) :
dans lesquels le fonctionnement de l'appareil peut être commandé de telle sorte que les vitesses relatives de rotation autour des premier et second axes (13, 14) puissent être variées pendant chaque cycle d'emballage pour obtenir une variation requise lors de l'enroulement de la couverture par chevauchement de la balle (20) ;
**caractérisé en ce que** l'appareil inclut un programmateur qui est programmé pour fournir une variation des vitesses relatives autour des premier et second axes (13, 14) pendant chaque cycle d'emballage, grâce à quoi le cycle d'emballage a au moins deux étapes d'emballage, dans lesquelles une première étape de couverture est exécutée avec un rapport de chevauchement prédéterminé entre des enroulements successifs (a, b), et une ultérieure étape de couverture est exécutée avec un rapport de chevauchement différent entre des enroulements successifs (a, b).

2. Appareil selon la revendication 1, dans lequel la seconde étape de couverture a un pourcentage de chevauchement inférieur entre des enroulements successifs (a, b) au chevauchement de pourcentage dans la première étape de couverture.

3. Appareil selon une quelconque revendication précédente, dans lequel l'appareil est programmé pour fournir un cycle d'emballage dans lequel une couverture initiale de la surface externe de la balle comprend au moins trois couches d'enroulements a, b, avec un chevauchement d'approximativement 2/3 entre des enroulements successifs, et une étape ultérieure ou finale d'emballage est fournie par au moins deux couches d'enroulements à chevauchement avec un chevauchement d'approximativement 50 % entre des enroulements successifs.

4. Appareil selon la revendication 3, dans lequel les trois couches initiales d'enroulements avec un chevauchement d'approximativement 2/3 et les deux couches successives avec un chevauchement d'approximativement 50 % sont obtenues tandis que la balle (20) est faite pivoter autour du premier axe (13) par approximativement un tour.

5. Appareil selon une quelconque des revendications précédentes, dans lequel la table est du type à plateau tournant.

6. Appareil selon une quelconque des revendications 1 à 4, dans lequel le support 11 est pivotable autour d'un second axe vertical (14) à la manière d'un agencement de type à satellite tournant.

7. Appareil selon une quelconque des revendications 1 à 4, dans lequel le support (11) est monté sur un anneau pivotable qui est pivotable dans un plan substantiellement vertical ou horizontal, et ayant un axe de rotation s'étirant substantiellement en perpendiculaire au premier axe (13) autour duquel la balle (20) est pivotable.

8. Appareil selon la revendication 7, et sous forme d'un appareil intégré de mise en balles et d'emballage.
